# EUROPÄISCHE PATENTSCHRIFT

(11) **EP 1 382 008 B1**
(45) Veröffentlichungstag und Bekanntmachung des Hinweises auf die Patenterteilung: **02.08.2006**
(21) Anmeldenummer: 02766608.0
(22) Anmeldetag: 26.04.2002
(51) Int. Cl.: G06F 3/033

(54) **BEDIENEINHEIT MIT BERUEHRUNGSEMPFINDLICHER FLAECHE, INSBESONDERE FÜR DIE BEDIENUNG EINES MULTIMEDIASYSTEMS IN EINEM KRAFTFAHRZEUG**
OPERATING UNIT WITH TOUCHPAD, ESPECIALLY FOR OPERATING A MULTIMEDIA SYSTEM IN A MOTOR VEHICLE
UNITE DE COMMANDE AVEC PACE TACTILE, PERMETTANT NOTAMMENT L'UTILISATION D'UN SYSTEME MULTIMEDIA DANS UNE AUTOMOBILE

(30) Priorität: 27.04.2001 DE 10120691
(43) Veröffentlichungstag der Anmeldung: 21.01.2004
(73) Patentinhaber: SIEMENS AKTIENGESELLSCHAFT, 80333 München (DE)
(72) Erfinder: CLABUNDE, Andreas, 93049 Regensburg (DE); DÖRRE, Helmut, 92272 Freudenberg/Aschach (DE); KINZLER, Hans, 93049 Regensburg (DE); NGUYEN, Nhu, 93057 Regensburg (DE); PICHL, Oliver, 91083 Baierdorf-Hagenau (DE)
(86) Internationale Anmeldenummer: PCT/DE2002/001526
(87) Internationale Veröffentlichungsnummer: WO 2002/089047

(56) Entgegenhaltungen:
- WO-A-00/42493
- WO-A-01/02206
- DE-A- 19 752 054
- FR-A- 2 718 862
- US-A- 4 194 155
- US-A- 6 148 094
- US-A- 6 154 201

## Beschreibung

Die Erfindung betrifft eine Bedieneinheit, insbesondere für die Bedienung eines Multimediasystems in einem Kraftfahrzeug, mit einem Bedienelernent, das um eine Achse drehbar und längs dieser Achse verschiebbar und in einer Position auf dieser Achse verrastbar ist.

Eine solche Bedieneinheit ist aus der EP 0 366 132 B1 bekannt. Dort wird durch Drehen eines Drehschalters um eine Achse aus einem auf einem Bildschirm dargestellten Menue eine bestimmte Funktion ausgewählt und durch Drücken des Schalters bestätigt. Durch Ziehen des Schalters kann eine versehentliche Bestätigung zurückgenommen werden. Durch die Bestätigung wird in ein anderes Menue gewechselt, in dem in gleicher Weise eine Auswahl möglich ist.

In der US-A-6,154,201, gegen die Anspruch 1 abgegrenzt wurde, und in der DE-A-197 52 054 ist jeweils eine Bedieneinheit derart ausgebildet, dass das Bedienelement in zumindest einer zu seiner Drehachse orthogonalen Ebene zur Ansteuerung der Bewegung eines auf einem Bildschirm des Multimediasystems darstellbaren Zeigers in beliebiger Richtung verschiebbar ist. Das Bedienelement kann also in der Art eines "joysticks" verwendet werden, so dass nicht nur spezielle Elemente aus einer fest vorgegebenen Anzahl von auf einem Bildschirm darstellbaren Elementen beispielsweise aus einem Menue, sondern beliebige Punkte auf einem Bildschirm ausgewählt werden können, wie dies durch den von einer Maus gesteuerten Zeiger bei Personal Computern bekannt ist.

Auch die US 4,194,155 offenbart eine Eingabevorrichtung.

Die Aufgabe der Erfindung ist es, eine gattungsgemäße Bedieneinheit so weiterzubilden, dass eine komfortablere Bedienung eines Multimediasystems auch bei einer Erhöhung der Funktionalität möglich wird.

Die Aufgabe wird durch die Merkmale des Anspruchs 1 gelöst. Vorteilhafte Weiterbildungen sind in den Unteransprüchen angegeben.

Bei der Erfindung weist die Bedieneinheit zusätzlich ein Touchpad auf, das sich sowohl mit dem drehbaren Teil des Bedienelements mitdrehen oder auch nicht mitdrehen kann. Das Touchpad kann zur Schrifterkennung dienen oder auch zur Bewegung des Zeigers auf dem Bildschirm des Multimediasystems hergenommen werden. Es ist außerdem möglich, auf die Bewegung in einer zur Drehachse des Bedienelements orthogonalen Ebene zur Zeigerbewegung zu verzichten und nur das Touchpad hierfür zu verwenden.

Dies ist mit nur einem Bedienelement in einem Fahrzeug möglich, das möglichst ergonomisch beispielsweise auf der Mittelkonsole angeordnet ist, so dass der Fahrer des Fahrzeugs das dazugehörende Multimediasystem einfach und bequem bedienen kann.

In Weiterbildung der Erfindung kann das Bedienelement nicht nur in Richtung der Drehachse aus der Ruhestellung gedrückt oder gezogen werden, sondern ist auch in zumindest einer weiteren Stellung verrastbar, so dass in einer weiteren Ebene eine bequeme Drehung des Bedienelements oder eine beliebige Bewegung in dieser Ebene möglich ist, ohne dass das Bedienelement in dieser Ebene vom Bediener gehalten werden muss. '

In weiterer Weiterbildung der Erfindung kann das Bedienelement in jeder Ebene eine Ruhestellung einnehmen, in die es mittels Rückstellelemente nach einer Auslenkung durch den Bediener rückstellbar ist. Auf diese Weise kann der Bediener davon ausgehen, dass nach jedem Loslassen des Bedienelements der Zeiger an einer vorbestimmten Stelle steht. Außerdem muss das Bedienelement gegen die Kraft der Rückstelleleinente bewegt werden, was üblicherweise eine gleichförmigere Bewegung ermöglicht.
Zur Identifizierung autorisierter Fahrzeugbenutzer kann in die Bedieneinheit außerdem ein Fingerabdrucksensor integriert sein.

In einer vorteilhaften Ausbildung der Erfindung ist die Geschwindigkeit des auf dem Bildschirm des Multimediasystems darstellbaren Zeigers eine Funktion der zurückgelegten Strekke der Auslenkung des Bedienelements aus seiner Ruhelage. Die Funktion kann beispielsweise eine e-Funktion sein, aber auch zu einer der Auslenkung des Bedienelements proportionalen Geschwindigkeit des Zeigers führen.

Durch die vielfältigen Betätigungsmöglichkeiten des Bedienelements kann jeder Betätigungsmöglichkeit eine bestimmte vorteilhafte Funktionalität zugeordnet werden. So ist es beispielsweise möglich, in besonders vorteilhafter Weise durch Ziehen am Bedienelement, also durch Bewegung des Bedienelements in Richtung seiner Drehachse aus jeder beliebigen Stelle der verschiedenen Bedienmenues in ein Hauptmenue zu kommen.

Die Erfindung soll nachfolgend anhand eines Ausführungsbeispiels mit Hilfe von Figuren näher beschrieben werden. Dabei zeigen:
- Figur 1: eine detaillierte Darstellung einer möglichen Ausführung für ein Bedienelement einer erfindungsgemäßen Bedieneinheit und
- Figur 2: eine quasi fotographische Darstellung der Draufsicht auf eine erfindungsgemäße Bedieneinheit.

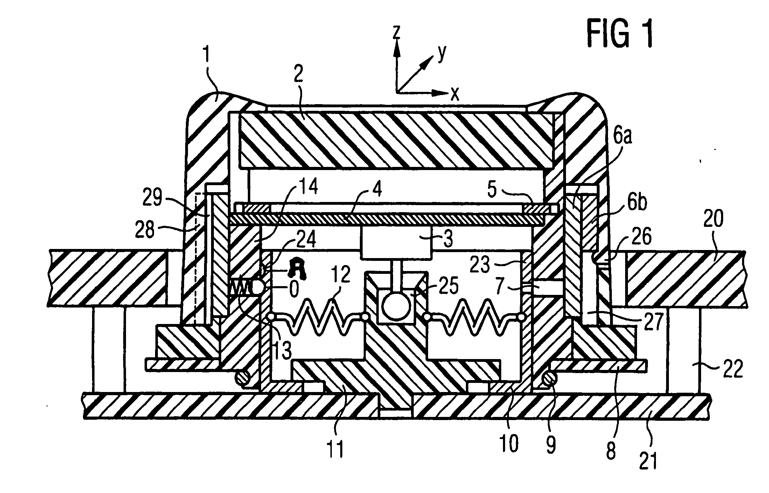

Das erfindungsgemäße Bedienelement gemäß der Figur 1 ist in einer Ausnehmung eines Gehäuseteils 20 beispielsweise der Mittelkonsole eines Kraftfahrzeugs angeordnet. Es sitzt auf einer Trägerplatte 21, die mittels Abstandhalterstifte 22 mit dem Gehäuseteil 20 verbunden ist.

Zur Bewegung in beliebiger Richtung in einer x-y-Ebene gemäß dem in der Figur eingezeichneten Koordinatensystem weist das Bedienelement eine Hülse 10 auf, die in x-y-Richtung beweglich, jedoch in z-Richtung durch einen Dorn 11 arretiert ist. Die Hülse 10 ist mit dem Dorn 11 über Rückstellfederelemente 12 verbunden, die einerseits eine Bewegung in x-y-Richtung zulassen, andererseits eine Drehung der Hülse 10 um die z-Achse verhindern. Die Rückstellfederelemente 12 zwingen die Hülse 10 in die Ruhestellung x,y=0 zurück, wenn keine Kraft auf die Hülse 10 ausgeübt wird.

Über die Hülse 10 ist eine Aufnahme 14 gesteckt, die mittels Arretierungselemente 7, die in eine Nut 23 der Hülse 10 eingreifen, gegen ein Verdrehen der Aufnahme 14 gegen die Hülse 10 gesichert ist.

Die Hülse 10 weist außerdem Mulden 24 auf, in die Rastfederelemente 13 eingreifen können, um die Aufnahme 14 in z-Richtung in Ruhestellungen halten zu können. In der Figur 1 sind zwei solche mit "0" und "A" gekennzeichnete Ruhestellungen eingezeichnet. Es sind jedoch prinzipiell weitere Ruhestellungen in z-Richtung möglich.

Auf die Aufnahme 14 ist eine erste Leiterplatte 8 gesteckt, die von einem Sprengring 9 in ihrer Lage gesichert ist. Über die Aufnahme 14 ist von der anderen Richtung her der Innenring 6a eines Ringencoders gesteckt und mit der ersten Leiterplatte 8 verlötet. Über den Innenring 6a des Ringencoders ist der gegenüber dem Innenring 6a verdrehbare Außenring 6b des Ringencoders gesteckt. Der Außen- und der Innenring 6a, 6b können kleine Nuten und Nasen (nicht dargestellt) aufweisen, um eine gerasterte Verdrehung der beiden Ringe 6a, 6b gegeneinander zu ermöglichen.

In die Aufnahme 14 ist eine zweite Leiterplatte 4, auf der ein Joystick 3 angeordnet ist, so eingefügt, dass der Joystick 3 in eine Ausnehmung 25 des Dorns 11 ragt. Die zweite Leiterplatte 4 ist mit einem Sicherungsring 5 gesichert. Der Joystick 3 detektiert die Bewegungen der Hülse 10 gegenüber dem Dorn 11 in einer x-y-Ebene durch Verkippen und gibt entsprechende elektrische Signale ab, die über die zweite Leiterplatte 4 weitergeleitet werden. Der Joystick 3 ist außerdem als Taster ausgebildet, der eine Bewegung der Aufnahme 14 in negativer z-Richtung durch Drücken des Bedienelements detektiert.

In die Aufnahme 14 ist zuoberst ein Touchpad 2 eingefügt. Über die Aufnahme 14 und den Ringencoder 6a, 6b ist ein Bedienring 1 aufgesteckt, der einerseits mittels Rastnasen 26 in entsprechende Ausnehmungen 27 im Außenring 6b des Ringencoders eingreift, um gegen ein Abziehen gesichert zu sein und der andererseits an seiner Innenseite Vorsprünge 28 aufweist, die in Nuten 29 des Außenrings 6b des Ringencoders eingreifen, um eine Drehung des Bedienrings 1 auf den Außenring 6b des Ringencoders zu übertragen.

Wenn in der Beschreibung von Vorsprüngen 28, Nuten 29, Rastnasen 26, Ausnehmungen 27 usw. die Rede war, obwohl in der Figur 1 nur jeweils ein solches Element zu sehen ist, so ist das so zu verstehen, dass über den Umfang des Bedienelements verteilt auch zwei oder mehrere solcher Elemente vorgesehen sein können.

Mit dem in der Figur 1 dargestellten Ausführungsbeispiel eines erfindungsgemäßen Bedienelements einer Bedieneinheit ist, wie der Beschreibung zu entnehmen ist, eine Drehung um die z-Achse ebenso möglich wie ein Drücken in negativer z-Richtung und ein Ziehen in z-Richtung. Außerdem ist ein Verschieben des Bedienelements in x-y-Ebenen in verschiedenen Positionen auf der z-Achse in beliebiger Richtung möglich. Damit ist es mit nur einem Bedienelement möglich, einen Zeiger auf einem Bildschirm eines Multimediasystems zu bewegen und beispielsweise durch Drücken des Bedienelements ein bestimmtes, auf dem Bildschirm angezeigtes und durch den Zeiger angewähltes Untermenue einer Vielzahl von Menues auszuwählen und auf diese Weise in beliebige Menues zu gelangen. In vorteilhafter Weise kann durch Ziehen des Bedienelements in z-Richtung ein Rückspruch in das Hauptmenue aus jedem beliebigen Untermenue erfolgen.

Das Touchpad 2 ermöglicht weitere Zeigerbewegungen oder auch eine Schrifterkennung. Das Touchpad 2 kann dabei sowohl mit dem Bedienring 1 fest verbunden sein und somit dessen Drehungen mitmachen als auch mit der Aufnahme 14 fest verbunden sein.

Die elektrischen Anschlüsse der Leiterplatten 4, 8 können beispielsweise durch den Dorn 11 nach außen geführt werden. Um die Raststellungen "0" und "A" der Aufnahme 14 elektrisch erfassen zu können, kann ein Spannungsteiler realisiert werden. Hierfür bilden die Bauelemente Rastfederelemente 13 und Hülse 10 einen Stromkreis, mit dem es möglich ist, die entstehende Spannungsdifferenz abzugreifen.

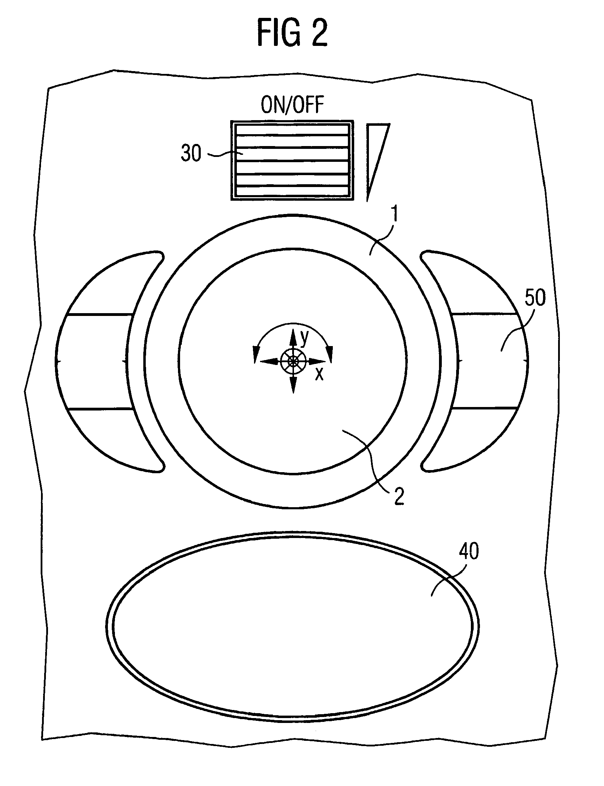

In der Figur 2 ist eine quasi fotographische Darstellung der Draufsicht auf eine erfindungsgemäßes Bedieneinheit gezeigt. Vom Bedienelement sind der dreh-, drück-, zieh- und verschiebbare Bedienring 1 sowie das Touchpad 2 zu erkennen, in das ein Fingerabdruchsensor integriert ist. Die dargestellte Bedieneinheit weist außerdem eine Handgrube 40 zum Fixieren des Handgelenks auf, falls im Fahrzeug keine Mittelarmlehne zum entspannten Auflegen des Handgelenkes/Armes zur Verfügung steht. Außerdem ist ein Ein/Ausschalter 30 vorgesehen, um das Multimediasystem zu aktivieren bzw. zu deaktivieren. Für spezielle Funktionen, beispielsweise immer wiederkehrende Funktionen, sind mehrere Tasten 50 um das Bedienelement angeordnet.

## Patentansprüche

1. Bedieneinheit, mit einem Bedienelement (1, 14), das um eine Achse (z) drehbar und längs dieser Achse (z) verschiebbar und in einer Position ("0") auf dieser Achse (z) verrastbar ist,
wobei das Bedienelement in zumindest einer zu dieser Achse (z) orthogonalen Ebene (x, y) zur Ansteuerung der Bewegung eines auf einem Bildschirm eines Multimediasystems darstellbaren Zeigers in beliebiger Richtung verschiebbar ist,
**dadurch gekennzeichnet, dass** ein Touchpad (2) in das Bedienelement (1, 14) integriert ist.

2. Bedieneinheit nach Anspruch 1, **dadurch gekennzeichnet, daß** das Bedienelement in zumindest einer weiteren Position ("A") auf der Achse (z) verrastbar ist.

3. Bedieneinheit nach Anspruch 1 oder 2, **dadurch gekennzeichnet, daß** das Bedienelement in jeder Ebene (x, y) eine Ruhelage einnimmt, in die es mittels Rückstellelemente (12) nach einer Auslenkung rückstellbar ist.

4. Bedieneinheit nach Anspruch 1, **dadurch gekennzeichnet, daß** das Touchpad (2) fest mit dem nicht drehbaren Teil (14) des Bedienelements verbunden ist.

5. Bedieneinheit nach Anspruch 1, **dadurch gekennzeichnet, daß** das Touchpad (2) fest mit dem drehbaren Teil (1) des Bedienelements verbunden ist.

6. Bedieneinheit nach einem der vorhergehenden Ansprüche, **dadurch gekennzeichnet, daß** sie einen Fingerabdrucksensor aufweist.

7. Bedieneinheit nach einem der vorhergehenden Ansprüche 3-6, **dadurch gekennzeichnet, daß** die Geschwindigkeit des auf dem Bildschirm des Multimediasystems darstellbaren Zeigers eine Funktion der Strecke der Auslenkung des Bedienelements aus seiner Ruhelage ist.

8. Bedieneinheit nach einem der vorhergehenden Ansprüche, **dadurch gekennzeichnet, daß** durch ein Pressen des Bedienelements in Richtung auf dessen Drehachse (z) eine Funktion auslösbar ist.

## Claims

1. Operator control unit, having an operator control element (1, 14) which can be rotated about an axis (z) and displaced along this axis (z) and can be latched in a position ("0") on this axis (z), the operator control element being able to be displaced in at least one plane (x, y) which is orthogonal with respect to this axis (z), in order to actuate the movement of a cursor in any desired direction, which cursor can be represented on a screen of a multimedia system,
**characterized in that** a touchpad (2) is integrated into the operator control element (1, 14).

2. Operator control unit according to Claim 1, **characterized in that** the operator control element can be latched in at least one further position ("A") on the axis (z).

3. Operator control unit according to Claim 1 or 2,
**characterized in that** the operator control element assumes, in each plane (x, y), a position of rest into which it can be reset by means of restoring elements (12) after a deflection.

4. Operator control unit according to Claim 1, **characterized in that** the touchpad (2) is permanently connected to the non-rotatable part (14) of the operator control element.

5. Operator control unit according to Claim 1, **characterized in that** the touchpad (2) is permanently connected to the rotatable part (1) of the operator control element.

6. Operator control unit according to one of the preceding claims, **characterized in that** it has a fingerprint sensor.

7. Operator control unit according to one of the preceding claims 3-6, **characterized in that** the speed of the cursor which can be represented on the screen of the multimedia system is a function of the distance by which the operator control element is deflected from its position of rest.

8. Operator control unit according to one of the preceding claims, **characterized in that** a function can be triggered by pressing the operator control element in the direction of its axis (z) of rotation.

## Revendications

1. Ensemble de commande, comportant un élément de commande (1, 14), mobile en rotation autour d'un axe (z) et pouvant coulisser le long de cet axe (z) et être encliqueté dans une position ("0") sur cet axe (z), où l'élément de commande peut coulisser dans n'importe quelle direction dans au moins un plan (x, y) perpendiculaire à cet axe (z) pour commander le déplacement d'un pointeur représenté sur un écran d'un système multimédia, **caractérisé par le fait qu'**une surface tactile ou "touchpad" (2) est intégrée dans l'élément de commande (1, 14).

2. Ensemble de commande selon la revendication 1, **caractérisé par le fait que** l'élément de commande peut être encliqueté dans au moins une autre position ("A") sur l'axe (z).

3. Ensemble de commande selon la revendication 1 ou 2, **caractérisé par le fait que** l'élément de commande prend, dans chaque plan (x, y), une position de repos dans laquelle il peut, au moyen d'éléments à ressort de rappel (12), être ramené après une déviation.

4. Ensemble de commande selon la revendication 1, **caractérisé par le fait que** la surface tactile ou "touchpad" (2) est fixée de manière rigide à la partie non rotative (14) de l'élément de commande.

5. Ensemble de commande selon la revendication 1, **caractérisé par le fait que** la surface tactile ou "touchpad" (2) est fixée de manière rigide à la partie rotative (1) de l'élément de commande.

6. Ensemble de commande selon l'une des revendications précédentes, **caractérisé par le fait qu'**il comporte un détecteur d'empreintes digitales.

7. Ensemble de commande selon l'une des revendications précédentes 3 à 6, **caractérisé par le fait que** la vitesse du pointeur représenté sur l'écran du système multimédia est fonction de l'importance de l'élongation de l'élément de commande à partir de sa position de repos.

8. Ensemble de commande selon l'une des revendications précédentes, **caractérisé par le fait qu'**il est possible de déclencher une fonction en appuyant sur l'élément de commande dans la direction de son axe de rotation (z).
